# EUROPÄISCHE PATENTANMELDUNG

(11) **EP 1 566 301 A1**
(43) Veröffentlichungstag der Anmeldung: **24.08.2005**
(21) Anmeldenummer: 05002679.8
(22) Anmeldetag: 09.02.2005
(51) Int. Cl.: B60J 7/043, B60J 7/057, B60R 9/04

(54) **Verfahren zum Steuern der Bewegung des Deckels eines öffnungsfähigen Fahrzeugdachs und Steuerungsvorrichtung**

(30) Priorität: 19.02.2004 DE 102004008174
(71) Anmelder: ArvinMeritor GmbH, 63128 Dietzenbach (DE)
(72) Erfinder: Trüol, Jan, 64347 Griesheim (DE); Heyn, Detlef, 35374 Kirchhain (DE)
(74) Vertreter: Kitzhofer, Thomas

(57) **Zusammenfassung**

Ein Verfahren zum Steuern der Bewegung des Deckels (8) eines öffnungsfähigen Fahrzeugdachs und eine Steuerungsvorrichtung für den verfahrbaren Deckel (8) sehen vor, daß über Sensoren (24) das Vorhandensein einer Dachstruktur (16) detektiert und daß daraufhin eine Deckelausstellbewegung und/oder die Verfahrbewegung über einen feststehenden hinteren Dachbereich (12) verhindert wird.

## Beschreibung

Die Erfindung betrifft ein Verfahren zum Steuern der Bewegung des eine Dachöffnung wahlweise schließenden oder freilegenden Deckels eines Fahrzeugdaches und eine Steuerungsvorrichtung für den verfahrbaren Deckel eines öffnungsfähigen Daches, insbesondere eines Schiebedaches.

Unter dem Begriff "Schiebedach" kann im folgenden sowohl ein herkömmliches Schiebe-Hebedach, ein Lamellendach mit einzelnen verfahrbaren Deckelelementen als auch ein sogenannten Spoilerdach verstanden werden. Während bei einem herkömmlichen Schiebe-Hebedach der hintere Rand des Deckels über die Dachhaut zur Schaffung eines Lüftungsschlitzes angehoben und beim Freigeben der Dachöffnung der Deckel unter die Dachhaut verfahren werden kann, wird beim Spoilerdach der Deckel beim Zurückfahren über einen feststehenden hinteren Dachabschnitt gefahren.

Die Erfindung zielt insbesondere auf ein solches Spoilerdach ab und verbessert die Sicherheit beim Betätigen eines Deckels. Aber auch die Hub- oder Ausstellbewegung von Schiebe-Hebedächern kann damit gesteuert werden.

Hierzu sieht das erfindungsgemäße Verfahren folgende Schritte vor:
a) Mittels wenigstens eines Sensors wird das Vorhandensein einer Dachstruktur erkannt,
b) bei Vorhandensein einer Dachstruktur und bei Betätigung eines Schalters zum Ausstellen des Deckels verhindert eine mit dem Sensor gekoppelte Steuerung die Energiezufuhr zu dem für die Verfahrbewegung über einen feststehenden hinteren Dachbereich und/oder die Ausstellbewegung verantwortlichen Antrieb.

Der Begriff "Dachstruktur" bezeichnet hier nicht ständig außen auf dem Dach montierte Bauteile oder Gegenstände, z.B. einen demontierbaren Dachaufbau, einen Dachlastenträger oder auch eine Dachlast. Beim Ausstellen des Deckels, sei es nur des hinteren Randes oder beim kompletten Verfahren des Deckels über den feststehenden Dachabschnitt kann es zum Anstoßen an die Dachstruktur, also z.B. den demontierbaren Dachaufbau, Dachlastenträger oder die Dachlast kommen. Da aufgrund immer besserer Klimatisierung im Fahrzeug auch in den Wintermonaten, in denen hauptsächlich Dachlastenträger verwendet werden, das Dach kurzzeitig geöffnet ist, kann es beim Ausstellen zu Beschädigungen des Deckels führen. Das erfindungsgemäße Verfahren verhindert automatisch das Ausstellen des Deckels bei möglicher Kollision mit der Dachstruktur.

Die erfindungsgemäße Steuerungsvorrichtung für den verfahrbaren Deckel hat wenigstens einen dachseitig angebrachten Sensor zum Detektieren einer Dachstruktur, eine mit dem Sensor gekoppelte Steuerung und einen Antrieb für den Deckel sowie einen Schalter zum Initiieren der Ausstell- oder Verfahrbewegung des Deckels. Die Steuerung ist so ausgebildet, daß sie bei Betätigung des Schalters zum Ausstellen des Deckels und bei Vorhandensein eines Dachlastenträgers oder ähnlichem eine Energiezufuhr zu dem die Verfahrbewegung über einen feststehenden hinteren Dachbereich und/oder die Ausstellbewegung hervorrufenden Antrieb verhindert.

Das erfindungsgemäße Verfahren und die erfindungsgemäße Steuerungsvorrichtung können ferner so ausgebildet sein, daß sie ein Öffnen des Daches, z.B. durch ein Verschieben des Deckels mit Absenken der hinteren Deckelkante erlauben, nicht jedoch das Ausstellen des Deckels.

Mikroschalter als Sensoren sind besonders vorteilhaft wegen ihrer Robustheit. Andere Varianten für die Ausbildung der Sensoren sind Kontakte oder berührungsfreie Sensoren.

Vorzugsweise ist der oder sind die Sensoren in einem sogenannten Dachmodul integriert, d.h. einem Verbundbauteil, das separat vom Dachrahmen gefertigt wird und auf diesen, insbesondere durch Kleben fixiert wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht auf ein Fahrzeugdach mit einem Dachmodul, dessen Deckel mit der erfindungsgemäßen Steuerungsvorrichtung verbunden ist,
- Figur 2 einen Längsschnitt durch das Fahrzeugdach nach Fig. 1,
- Figur 3 einen Schnitt durch das Fahrzeugdach längs der Linie III-III in Fig. 1,
- Figur 4 eine vergrößerte Ansicht des mit X bezeichneten Bereichs in Fig. 3 und
- Figur 5 eine nochmals vergrößerte Detailansicht des in Fig. 4 mit Y bezeichneten Bereichs.

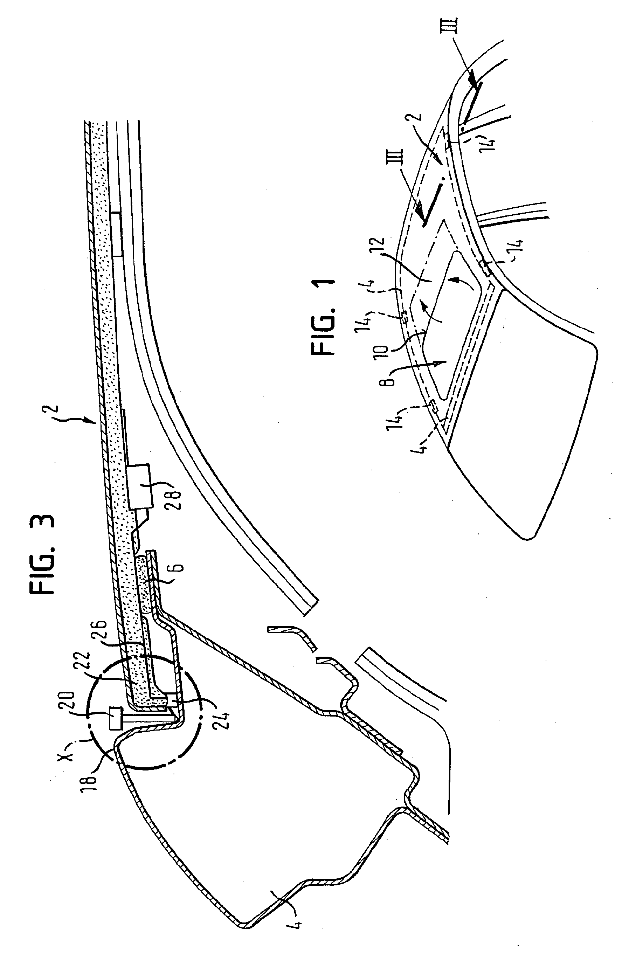

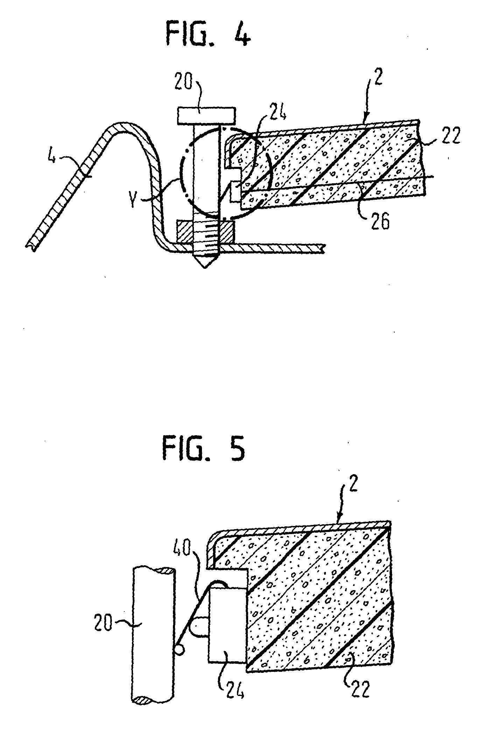

In Fig. 1 ist ein Fahrzeugdach dargestellt, das ein als fertiges Zulieferteil ausgeführtes Dachmodul 2 trägt. Das Dachmodul 2 bildet fast die gesamte Außenhaut des montierten Fahrzeugdaches und ist durch Kleben am Dachrahmen 4 befestigt. Eine entsprechende Kleberaupe ist in Fig. 3 mit dem Bezugszeichen 6 versehen. Das Fahrzeugdach kann geöffnet und eine Dachöffnung 7 freigelegt werden, indem ein ausstellbarer und verfahrbarer Deckel 8 an seinem hinteren Rand 10 nach oben bewegt wird und, falls die Dachöffnung weiter freigelegt werden soll, über den sich entgegen der Fahrtrichtung anschließenden (d.h. hinteren) feststehenden Bereich 12 des Daches verfahren wird. Ein solches Dach wird als Spoilerdach bezeichnet.

Alternativ kann der Deckel 8 bei einem Schiebe-Hebedach im Bereich seines hinteren Randes ausgestellt werden. Beim Verfahren nach hinten wird der Deckel 8 jedoch beim Schiebe-Hebedach unter den feststehenden Bereich 12 des Daches verfahren.

Der Dachrahmen 4 hat vier vorbestimmte Befestigungsstellen 14 zum Anbringen einer Dachstruktur, etwa eines demontierbaren Dachaufbaus oder hier beispielhaft gewählten Dachlastenträgers 16. Diese Befestigungsstellen 14 erstrecken sich zwischen dem Rand des Dachmoduls (siehe Fig. 3) und einem nach oben vorspringenden Abschnitt 18 des Dachrahmens 4. Ein Befestigungselement 20 zum Arretieren des Dachlastenträgers 16 ragt zwischen Rand und Abschnitt 18 und dringt zum Beispiel in den Dachrahmen 4 ein. Allerdings können die Befestigungsstellen auch komplett im Dachmodul integriert sein.

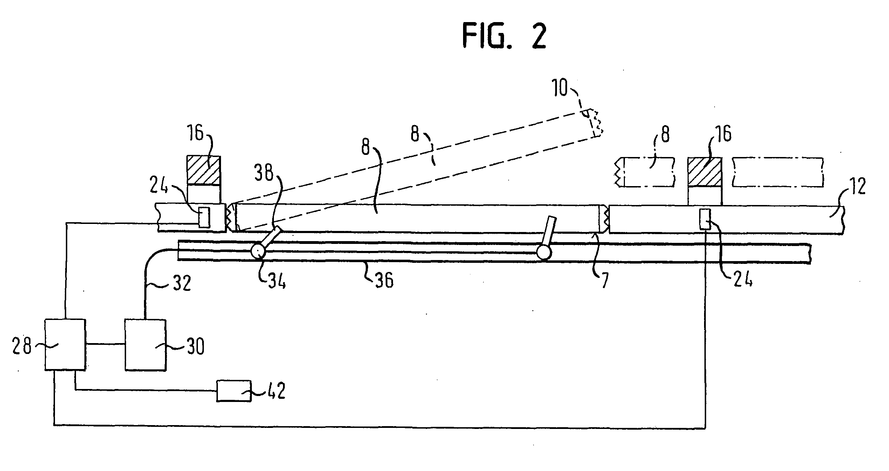

Im Randbereich des Dachmoduls 2 ist im Bereich einer Hinterschäumung 22, angrenzend an jede Befestigungsstelle 14 je ein Sensor in Form eines Mikroschalters 24 angebracht. Alle insgesamt vier Mikroschalter 24 sind über in die Hinterschäumung 22 eingebettete Leitungen 26 mit einer Steuerung 28 gekoppelt (Fig. 2). Die Steuerung 28 ist darüber hinaus mit einem Antrieb 30 in Form eines Elektromotors für den Deckel 8 verbunden (Fig. 3). Hierzu ist mit dem Antrieb 30 ein drucksteif geführtes Kabel 32 gekoppelt, welches wiederum mit Gleitern 34 verbunden ist, die in einer Längsführung 36 verschieblich sind. Die Gleiter 34 sind wiederum über Hebegestänge 38, die nur sehr vereinfacht wiedergegeben sind, mit dem Deckel 8 gekoppelt.

Sämtliche Mikroschalter 24 sind parallel geschaltet.

Wie in den Fign. 4 und 5 zu sehen ist, wird ein seitlich abstehender Schaltarm 40 des Mikroschalters 24 betätigt, sobald das Befestigungselement 20 am Dachrahmen 4 positioniert wird.

In Fig. 2 ist zu erkennen, daß es beim Ausstellen des Deckels 8, d.h. dem Bewegen des hinteren Randes 10 nach oben zu einer Kollision mit am Dachlastenträger 16 befindlichen Gegenständen kommen würde, da der Dachlastenträger 16 relativ nahe an der Außenhaut des Dachmoduls entlangläuft. Auch ein Zurückfahren des Deckels 8 über den feststehenden Bereich 12, wie es mit unterbrochenen Linien dargestellt ist, wäre bei angebrachtem Dachlastenträger 16 nicht möglich.

Um dies zu vermeiden, ist eine Steuerungsvorrichtung vorgesehen, die aus den Mikroschaltern 24, der Steuerung 28 und dem Antrieb 30 gebildet ist.

Sobald also wenigstens ein Befestigungselement 20, das dem Dachlastenträger 16 zugeordnet ist, detektiert wird, verhindert die Steuerung 28 ein Ausstellen des Deckels 8 selbst dann, wenn ein mit der Steuerung 28 gekoppelter Schalter 42 zum Aktivieren des Antriebs 30 und zum Ausstellen des Deckels 8 betätigt wird. Die Steuerung 28 verhindert eine entsprechende Energiezufuhr zum Antrieb 30.

## Patentansprüche

1. Verfahren zum Steuern der Bewegung eines eine Dachöffnung wahlweise schließenden und freilegenden Deckels (8) eines Fahrzeugdaches, **gekennzeichnet durch** folgende Schritte:
a) mittels wenigstens eines Sensors wird das Vorhandensein einer Dachstruktur erkannt, und
b) bei Vorhandensein einer Dachstruktur und bei Betätigung eines Schalters (42) zum Ausstellen des Deckels (8) verhindert eine mit dem Sensor gekoppelte Steuerung (28) die Energiezufuhr zu dem für die Verfahrbewegung über einen feststehenden hinteren Dachbereich (12) und/oder die Ausstellbewegung verantwortlichen Antrieb (30).

2. Verfahren nach Anspruch 1, **dadurch gekennzeichnet, daß** mehrere Sensoren am Fahrzeugdach zum Detektieren der Dachstruktur vorgesehen sind.

3. Verfahren nach Anspruch 2, **dadurch gekennzeichnet, daß** die Sensoren im Bereich vorgegebener, fahrzeugseitiger Befestigungsstellen der Dachstruktur angeordnet sind.

4. Verfahren nach einem der vorhergehenden Ansprüche, **dadurch gekennzeichnet, daß** der Sensor oder die Sensoren Mikroschalter (24) sind.

5. Verfahren nach einem der vorhergehenden Ansprüche, **dadurch gekennzeichnet, daß** die Dachstruktur ein demontierbarer Dachaufbau, eine Dachlast oder ein Dachlastenträger (16) ist.

6. Steuerungsvorrichtung für den zum wahlweisen Schließen und Freilegen einer Dachöffnung verfahrbaren Deckel (8) eines Fahrzeugdaches, mit
wenigstens einem dachseitig angebrachten Sensor zum Detektieren einer Dachstruktur,
einer mit dem Sensor gekoppelten Steuerung (28),
einem Antrieb (30) für den Deckel (8) und
einem Schalter (42) zur Initiierung der Ausstell- und/oder Verfahrbewegung des Deckels (8),
wobei die Steuerung (28) so ausgebildet ist, daß sie bei Betätigung des Schalters (42) zum Ausstellen des Deckels (8) und bei Vorhandensein einer Dachstruktur eine Energiezufuhr zu dem die Verfahrbewegung über einen feststehenden hinteren Dachbereich (12) und/oder die Ausstellbewegung hervorrufenden Antrieb (30) verhindert.

7. Steuerungsvorrichtung nach Anspruch 6, **dadurch gekennzeichnet, daß** der Sensor ein Mikroschalter (24) ist.

8. Steuerungsvorrichtung nach einem der Ansprüche 6 und 7, **dadurch gekennzeichnet, daß** mehrere Sensoren am Fahrzeugdach zum Detektieren einer Dachstruktur vorgesehen sind.

9. Steuerungsvorrichtung nach einem der Ansprüche 5 bis 8, **dadurch gekennzeichnet, daß** der oder die Sensoren im Bereich fahrzeugseitiger Befestigungsstellen der Dachstruktur vorgesehen sind.

10. Steuerungsvorrichtung nach einem der Ansprüche 5 bis 9, **dadurch gekennzeichnet, daß** der oder die Sensoren in ein Dachmodul (2) integriert sind.
